# EUROPEAN PATENT SPECIFICATION

(11) **EP 2 981 705 B1**
(45) Date of publication and mention of the grant of the patent: **01.08.2018**
(21) Application number: 13880965.2
(22) Date of filing: 05.04.2013
(51) Int. Cl.: F03B 13/18, F03B 11/02

(54) **SUBMERSIBLE WAVE ENERGY CONVERSION UNIT**
TAUCHFÄHIGE WELLENENERGIEUMWANDLUNGSEINHEIT
UNITÉ DE CONVERSION SUBMERSIBLE D'ÉNERGIE DES VAGUES

(43) Date of publication of application: 10.02.2016
(73) Proprietor: AW-Energy Oy, 01730 Vantaa (FI)
(72) Inventor: JÄRVINEN, Arvo, FI-01230 Vantaa (FI); TUOKKOLA, Yrjö, FI-00650 Helsinki (FI); LIUKKONEN, Petri, FI-04310 Tuusula (FI)
(74) Representative: Salomäki, Juha Kari Ensio
(86) International application number: PCT/FI2013/050376
(87) International publication number: WO 2014/162037

(56) References cited:
- EP-A1- 2 597 299
- WO-A1-2004/007953
- KR-A- 20120 010 101
- US-A1- 2006 150 626
- US-A1- 2010 140 945
- US-A1- 2010 213 710

## Description

The present invention relates to a submersible wave energy conversion unit as defined in the preamble of claim 1.

The wave energy conversion unit according to the invention is suited very well for instance to be used in connection with a panel or wing element hinged with its lower edge to make a reciprocating movement caused by wave energy or tidal energy of seawater. The wave energy or tidal energy collected is further converted underwater with the remote controlled conversion unit for instance to electric energy and/or fresh water, hydrogen, pressurized water, pressurized air or chemicals. For the sake of simplicity, only the term wave energy is later mentioned and then both the wave energy and the tidal energy of seawater is meant.

According to the prior art there are various types of wave energy conversion units where the arrangements include a base and, for instance, one or more panels or wings of plate type pivotally connected to the base to make a reciprocating or oscillating movement about a rotation axis in response to wave forces or tidal forces. The oscillating movement is then converted for example to electric energy with the help of a generator or alike.

Typically a part of the components of the prior art wave energy conversion units such as hydraulic cylinders or pumps working as collecting means and a machinery room are situated separately in the neighborhood of the reciprocating panel, or the machinery room is installed on the shore where it is out of water. One typical solution of the prior art is shown in WO2004007953A1. When the hydraulic cylinders and a machinery room are in the water close to the panel arrangement they need a separate room and are subject to all harmful influences of seawater. Whereas if the machinery room is on the shore and the collecting means are far at the sea the pressurized water being as transmitter media has to be transferred at first to the shore and only then it is possible to convert the collected wave energy for instance to electric energy. This kind of transmission path is long and large and also very expensive.

The object of the present invention is to eliminate the drawbacks described above and to achieve a reliable, compact and efficient submersible wave energy conversion unit in order to be able to capture a maximum amount of available wave energy with the unit where the natural space of the unit is utilized for placement of the wave energy collecting means such as hydraulic cylinders or pumps and a machinery and control units. One object of the present invention is also to protect the wave energy collecting means such as hydraulic cylinders or pumps and the machinery and control units against the harmful influences of seawater. Yet one object of the present invention is to make the installation and maintenance of the submersible wave energy conversion unit easy and fast. The wave energy conversion unit according to the invention is characterized by what is presented in the characterization part of claim 1. Other embodiments of the invention are characterized by what is presented in the other claims.

The solution of the invention has the advantage that thanks to the large size of the panel of this size category the natural free space inside the panel can be utilized to place the wave energy collecting means such as hydraulic cylinders or pumps and the machinery and control units inside the panel unit where they are protected against harmful influences of salty seawater. Another advantage is the fact that a separate machine room is not needed at all. This saves room and installation work at the installation location because all the machinery for wave energy recovery is already installed in the panel. A further advantage is that the maintenance work is easy and fast, and can be done in fairly good conditions. All the components for the maintenance are inside the panel and can be taken with at the same time when the panel is transferred to the maintenance location. A part of the maintenance work can also be done inside the panel at the sea when the panel has been lifted onto the surface of the sea. Yet a further advantage is the easy and economical transmission path of the collected wave energy. Because all the machinery needed for the energy conversion is inside the panel only an electric cable is needed to transfer the electricity directly eligible for consumer use to further usage. If the conversion unit is purposed for other use, for example for producing fresh water, pressurized water, hydrogen, pressurized air or chemicals, the same degree of readiness is possible.

In the following, the invention will be described in detail by the aid of an example by referring to the attached simplified and diagrammatic drawings, wherein
- Fig. 1: presents an oblique top view of a wave energy conversion unit according to the invention,
- Fig. 2: presents in a front view, partially sectioned and in a simplified and diagrammatic way a wave energy conversion unit according to the invention,
- Fig. 3: presents in a top view a wave energy conversion unit according to Fig. 2,
- Fig. 4: presents in an enlarged and a partially sectioned front view, and in a simplified and diagrammatic way a machine room and the wave energy collecting means inside the panel according to the invention,
- Fig. 5: presents in an enlarged and a partially sectioned side view, and in a simplified and diagrammatic way the wave energy collecting means and the machine room inside the panel according to the invention when the panel is in the vertical position,
- Fig. 6: presents in an enlarged and a partially sectioned side view, and in a simplified and diagrammatic way the wave energy collecting means and the machine room inside the panel according to the invention when the panel is in an inclined position,
- Fig. 7: presents in an oblique top view main modular panel components of an embodiment of a wave energy conversion unit according to the invention, and
- Fig. 8: presents in an oblique top view of a modular panel of an embodiment of a wave energy conversion unit according to the invention.

The basic idea of the present invention is to place the machine room with all of its main components inside the reciprocating panel or wing. In this case the whole power-take-off machinery (PTO) including a wave energy collecting means and a wave energy conversion means is thus situated inside the reciprocating panel of the wave energy conversion unit according to the invention.

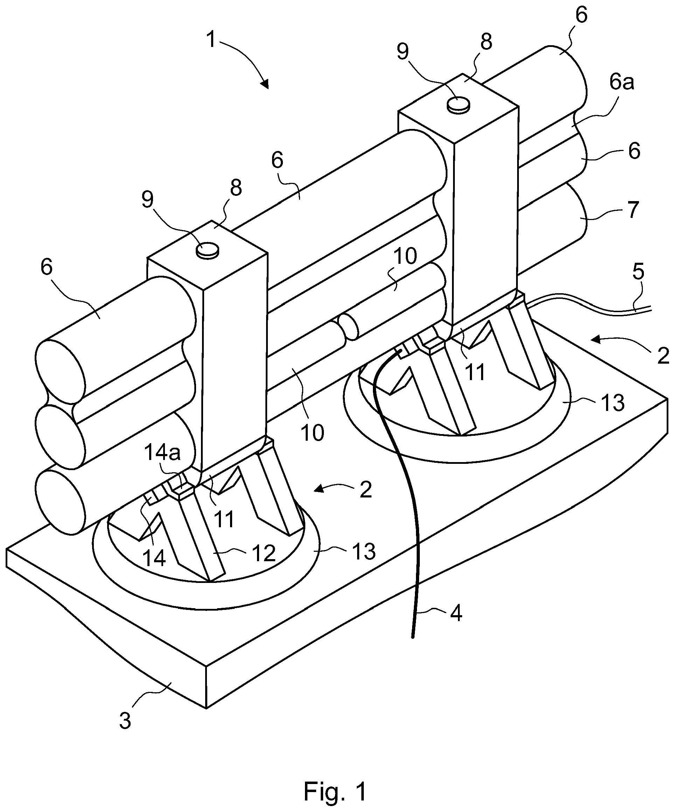

Fig. 1 presents an oblique top view of a wave energy conversion unit according to the present invention. The conversion unit comprises at least a reciprocating panel 1 or wing that oscillates back and forth with the movement of seawater for recovering kinetic energy like wave energy of seawater. The panel 1 is supported by at least one base 3 that is mounted onto the bottom of the sea. On the base 3 there is at least one stand 2, advantageously two stands 2 that are fastened onto the base 3. Each stand 2 has two supporting legs 12 that are fastened onto the supporting disc 13 that is further fastened onto the base 3. At its upper end each stand 2 supports an essentially horizontal stationary support shaft 14 on which the panel 1 is mounted at its lower edge by bearings so that the panel 1 can make a reciprocating motion along the movement of the seawater, for instance along the movement of waves. The shaft 14 is secured at its both ends on its place by a securing element 14a that keeps the shaft 14 fastened to the stand 2.

An electric cable 4 is equipped to transfer the converted seawater energy as electricity to further use, and/or other transmission means such as a pipe 5 for fresh water, pressurized water, hydrogen, pressurized air or chemicals are also connected to the wave energy conversion unit according to the invention. In connection with the electric cable 4 the wave energy conversion unit has an optical cable for controlling the system. The quality of electricity produced by the wave energy conversion unit according to the present invention is so good that the produced electricity can be connected directly into a commercial electricity network.

The panel 1 of the wave energy conversion unit according to the example of the present invention comprises at least two essentially horizontal tubular and essentially hollow capture elements 6, the first capture element 6 on the top and the second capture element 6 below the first one. There is a narrow cap between the first and second capture elements 6. The cap is covered by a covering element 6a that prevents water running through the cap between the capture elements 6. Below the capture elements 6 there is a third essentially horizontal and essentially hollow tubular capture element 7 that has a short distance to the second capture element 6. The three capture elements 6 and 7 are mutually in the same straight line in relation to each other and form together a capture surface for capturing the kinetic energy of the movement of seawater. The size category of the panel 1 is such that the diameter of the capture elements 6 and 7 is about 2 to 4 meters and the total length is about 20 to 40 meters. Thus the height of the capture surface of the panel 1 in the vertical position is about 7 to 14 meters.

In the horizontal direction the panel 1 is divided symmetrically into three separate sections by two shaft elements 8 that are essentially perpendicular to the capture elements 6 and 7, and extend from the top of the panel 1 to underneath of the panel 1 when the panel 1 is in its neutral vertical position. The lowermost part of each shaft element 8 has a housing 11 for closing the lower end of the shaft element 8 and protecting the wave energy collecting elements of the wave energy conversion unit. Whereas on top of each shaft element 8 there is a manhole with a watertight lid 9 for accessing the shaft element 8 for example when the maintenance of the machinery is needed. The inside of the shaft element 8 forms a dry space inside the panel 1. Likewise at least part of the insides of the capture elements 6 and 7 have been arranged to form a dry space inside the panel 1, and all the dry spaces inside the panel 1 can be connected to each other.

Essentially tubular hydraulic oil tanks 10 are situated horizontally at the side of the panel 1 between the second capture element 6 and the third capture element 7 and between the shafts elements 8. The hydraulic oil of the tanks 10 is used for the machinery of the wave energy conversion unit to convert wave energy to electricity or to some other suitable form.

When the bigger maintenance is needed the panel 1 is disconnected from the stands 2 by loosening the shaft securing elements 14a and the panel 1 is lifted with its shafts 14 onto the surface of the sea so that a part of the panel 1 remains under the surface whereas another part is above the surface. The panel 1 has been balanced so that when it is freely floating it keeps well balanced in its upright position. After lifting the panel 1 onto the surface the maintenance can be done at that location or the panel 1 can be towed to the shore for the maintenance.

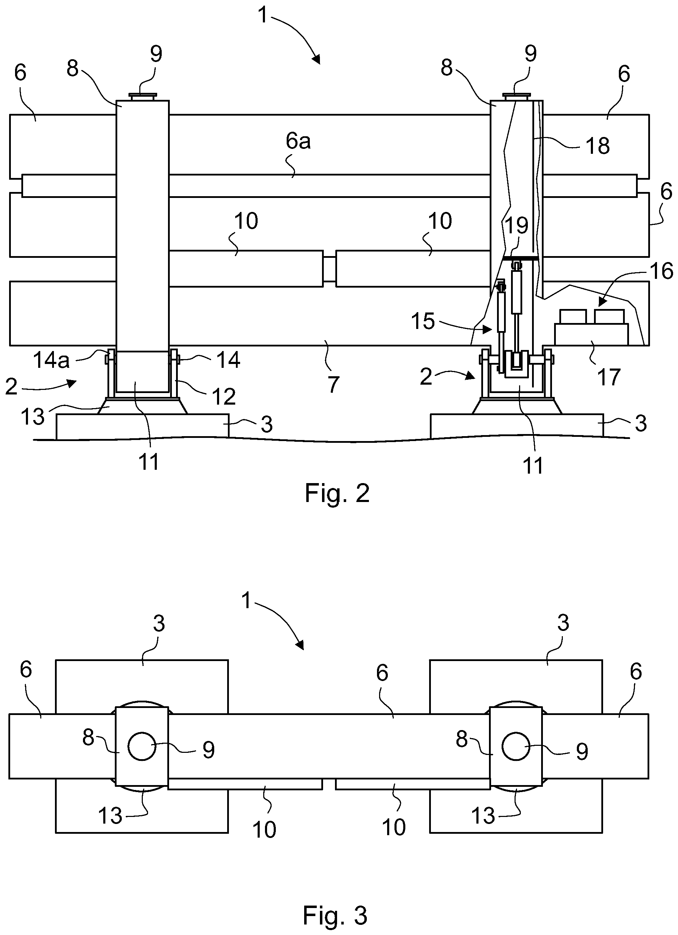

In Fig. 2 the wave energy conversion unit according to the invention is presented in a front view and partially sectioned, and in Fig. 3 the wave energy conversion unit according to the invention is presented in a top view. As mentioned earlier all the components needed to collect and convert wave energy of the sea are placed in connection with the panel 1 and mainly inside the panel 1. In order to better illustrate the structure of the wave energy conversion unit according to the invention the part of the front wall of the panel 1 is removed so that the inner structure of one shaft element 8 and the second end of the third capture element 7 is partially visible.

In a dry space inside the lower part of each shaft element 8 there are wave energy collecting means 15 such as hydraulic cylinders or hydraulic pumps that resist or attenuate the reciprocating movement of the panel 1 and by doing so create pressure and flow in the hydraulic circuit of the wave energy conversion unit. The achieved pressure and flow are directed to the hydraulic conversion unit 17 in the machinery space 16 in which conversion unit 17 a hydraulic motor rotates a hydraulic generator.

Ladders 18 are installed in a dry space inside the shaft element 8 in order to make it possible for the service people to descent down to the wave energy collecting means 15 and to the hydraulic conversion unit 17 for repair and maintenance purposes. A support base 19 is fastened inside the shaft element 8 in order to give a steady support and fastening place for the upper end of the wave energy collecting means 15.

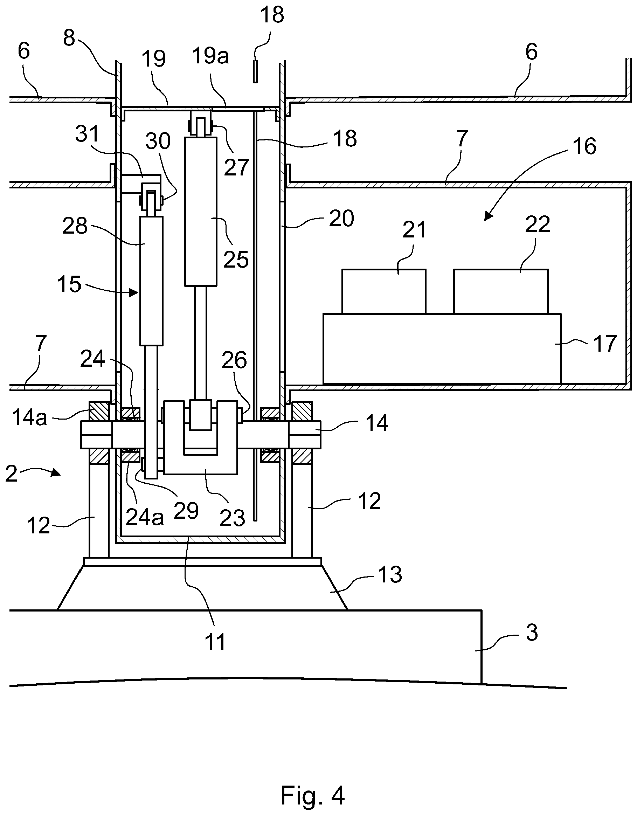

Fig. 4 presents in an enlarged and a sectioned front view the lower part of the second shaft element 8 and the second end of the third capture element 7. The wave energy collecting means 15 comprise two similar, mutually parallel hydraulic cylinders 25 that are arranged to resist or attenuate the reciprocating movement of the panel 1. The first end of the hydraulic cylinders 25 is hinged with a joint pin 27 to the lower surface of the support base 19 between the second capture element 6 and the third capture element 7, and the second end of the hydraulic cylinders 25 at the lower end of the shaft element 8 is hinged with a joint pin 26 to a support assembly 23 that is fastened stationary onto the non-rotary support shaft 14. In addition the collecting means 15 comprise a third hydraulic cylinder 28, a so-called booster cylinder, whose first end is hinged with a joint pin 30 to a fixed beam 31 in the shaft element 8 between the second capture element 6 and the third capture element 7, and whose second end at the lower end of the shaft 8 is hinged with a joint pin 29 to the support assembly 23. The task of the booster cylinder 28 is to keep the hydraulic system under certain overpressure all the time for instance in order to prevent the formation of air bubbles inside the hydraulic circuit.

The machinery space 16 is situated in a dry space inside the second end of the third capture element 7 and is connected to the dry space of the shaft element 8 through the opening 20. In addition of the conversion unit 17 the machinery space 16 contains also a control unit 21 of the hydraulic conversion unit 17 and a control unit 22 of the whole wave energy conversion unit. At least the wave energy collecting means 15, the hydraulic conversion unit 17 and the control unit 21 form together the power-take-off machinery (PTO) according to the invention.

The panel 1 is mounted onto the stationary support shaft 14 by the help of bearings 24 that are placed in bearing housings 24a fastened to the sidewalls of the shaft elements 8. So the panel 1 can make reciprocating movement around the central axis of the support shaft 14. The support base 19 has in addition a manhole 19a to facilitate the access to the lower parts of the shaft element 8.

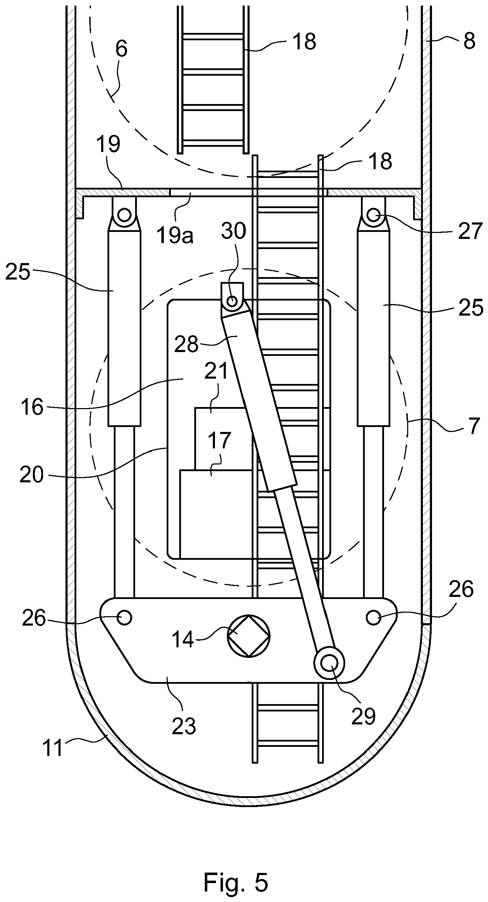

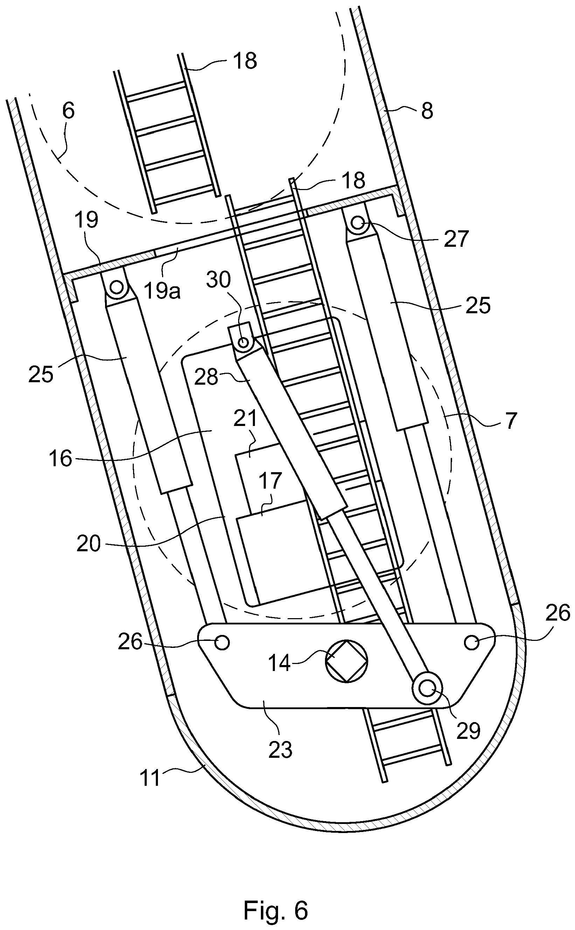

Fig. 5 and 6 present in an enlarged and a partially sectioned side view the wave energy collecting means 15 and the machinery space 16 inside the panel 1. Fig. 5 presents the situation when the panel 1 is in the vertical position, and Fig. 6 presents the situation when the panel 1 is in an inclined position. The figures have been simplified for the sake of simplicity. For example, the beam 31, to which the first end of the booster cylinder 28 is hinged, is removed. Likewise the stand 2 with all its components is removed.

The support shaft 14 and the support assembly 23 remain non-rotary when the panel 1 reciprocates and therefore only the length of the hydraulic cylinders 25 and 28 changes. This change causes pressure and flow in the hydraulic circuit of the hydraulic system of the wave energy conversion unit, which pressure and flow are converted in the machinery space 16 inside the panel 1 to electricity and/or other suitable forms such as fresh water, pressurized water, hydrogen, pressurized air or chemicals.

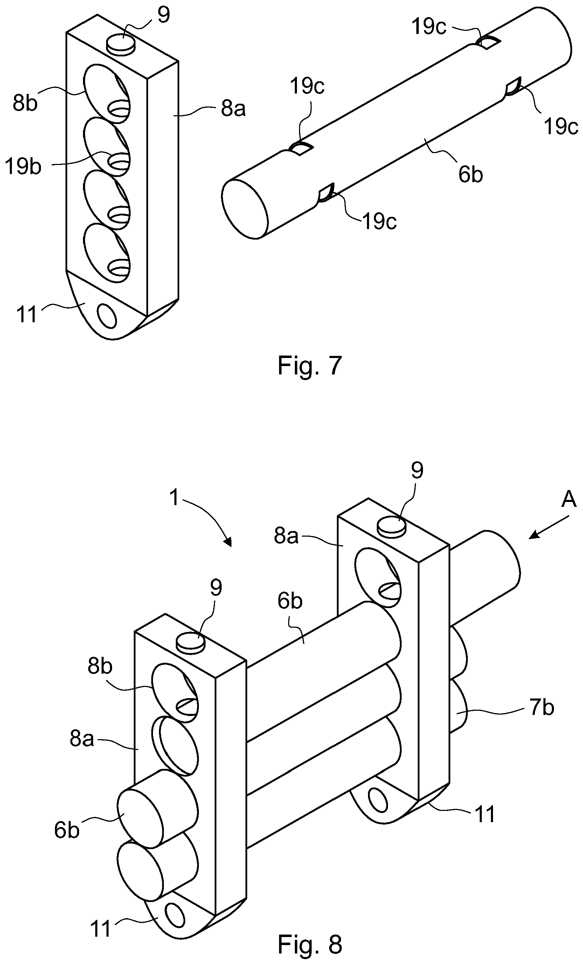

Figs. 7 and 8 present another panel embodiment of the invention. In this embodiment the panel 1 is made of modular main components, that are a modular shaft element or shaft element module 8a and a modular capture element or capture element module 6b, 7b. The shaft module 8a comprises for instance body structure that contains a housing 11 in its lower end and a group of apertures 8b that are for instance one upon each other. Advantageously the apertures 8b are connected to each other with apertures 19b that serve as manholes to facilitate the access to the lower parts of the shaft element module 8a. On top of the shaft element module 8a there is a manhole with a watertight lid 9.

The form and size of the apertures 8b corresponds to the cross-section of the capture element module 6b, 7b that is for instance an elongated tubular object with a circular cross-section. In addition the capture element module 6b, 7b comprises advantageously one or more apertures 19c that are arranged to be aligned with the apertures 19b of the shaft element module 8a in order to facilitate a connection from the top of the shaft element module 8a to the bottom of the shaft element module 8a. The capture element module 6b, 7b may also have other apertures.

In Fig. 7 the main modules 6b, 7b, 8a are separate, and in Fig. 8 the modular panel 1 according to the invention is partially erected. Two lowermost capture element modules 6b, 7b are ready at their final locations and the third one is almost in its final location. The capture element modules 6b, 7b can be assembled to their locations for example by pushing them linearly through the apertures 8b of the shaft element module 8a in the direction of arrow A. Depending on the structure the capture element modules 6b, 7b can be assembled to the shaft element module 8a in different ways, for instance instead of pushing them from the side they can be lowered from upwards.

The capture element modules 6b, 7b can be mutually different. Some of them can be only hollow pipes without apertures 19c and some of them can contain apertures 19c. In one panel 1, for instance, one or more uppermost capture element modules 6b can be empty and only inside the lowermost capture element module 7b there is the machinery space 16 with or without the power-take-off (PTO) machinery and/or the hydraulic conversion unit 17 and/or the control unit 21, and/or other components needed. If one capture element module 6b, 7b breaks down it can fast and easily be replaced with a new one.

All the dry spaces inside the panel 1 have been sealed against seawater with seals. In that case there are seals at least between the support shaft 14 and the sidewalls of the shaft element 8, between the lids 9 of the manholes and the roof plates of the shaft elements 8, and around through holes of the electric cable 4 and water pipe 5, or around corresponding pipes or hoses.

It is obvious to the person skilled in the art that the invention is not restricted to the example described above but that it may be varied within the scope of the claims presented below. Thus, for example, the structure of the wave energy recovery unit can vary.

## Claims

1. Submersible wave energy conversion unit comprising at least a stationary stand (2), a panel (1) hinged at its lower edge onto the stationary stand (2) to make a reciprocating motion in response to kinetic energy of waves or tidal currents, and a power-take-off (PTO) machinery placed inside the panel (1), **characterized in that** the panel (1) has at least one shaft element (8, 8a) having a dry space inside the panel (1), and the power-take-off (PTO) machinery contains wave energy collecting means (15) which are hydraulic cylinders (25) that are placed in the dry space inside the shaft element (8, 8a), and that the first end of the hydraulic cylinders (25) is hinged in the shaft element (8, 8a) with a joint pin (27) to a support base (19) reciprocating with the panel (1), and the second end of the hydraulic cylinders (25) at the lower end of the shaft element (8, 8a) is hinged with a joint pin (26) to a support assembly (23) placed inside the shaft element (8, 8a) and fastened stationary onto a non-rotary support shaft (14).

2. Submersible wave energy conversion unit according to claim 1, **characterized in that** the panel (1) has at least one essentially tubular and hollow capture element (7, 7b) forming together with the shaft element (8, 8a) a dry space inside the panel (1).

3. Submersible wave energy conversion unit according to claim 1 or 2, **characterized in that** a machinery space (16) containing at least a hydraulic conversion unit (17) and a control unit (21) for the hydraulic conversion unit (17) is placed in the dry space inside the panel (1).

4. Submersible wave energy conversion unit according to any of the claims above, **characterized in that** at the lower ends of the shaft elements (8, 8a) the panel (1) is mounted onto the stationary support shaft (14) by the help of bearings (24), and the panel (1) is arranged to make reciprocating movement around the central axis of the non-rotary support shaft (14).

5. Submersible wave energy conversion unit according to any of the claims above, **characterized in that** the dry spaces inside the panel (1) have been sealed against the seawater in seals at least between the support shaft (14) and the side walls of the shaft element (8, 8a), in places of lids (9) of the manholes and around through holes of the electric cable (4) and water pipes (5) or the corresponding pipes.

6. Submersible wave energy conversion unit according to any of the claims above, **characterized in that** the panel (1) consists at least of shaft element modules (8a) and a group of capture element modules (6b, 7b) of which at least one capture element module (7b) has internal dry room at least for the machinery space (16).

## Patentansprüche

1. Untertauchbare Wellenenergie-Konversionseinheit, aufweisend mindestens einen stationären Stand (2), ein an dessen unterem Rand auf dem stationären Stand (2) angelenktes Panel (1) zur Bewerkstelligung einer Pendelbewegung in Antwort auf die kinetische Energie von Wellen oder Gezeitenströmen, sowie eine innerhalb des Panels (1) platzierte Leistungsabzugs-Maschinerie (power-take-off; PTO), **dadurch gekennzeichnet, dass** das Panel (1) mindestens ein Schaftelements (8, 8a) mit einem Trockenraum innerhalb des Panels (1) hat, und dass die Leistungsabzugs-Maschinerie Wellenenergie-Sammelmittel (15) in Form von Hydraulikzylindern (25) hat, die in dem Trockenraum innerhalb des Schaftelements (8, 8a) platziert sind, und dass das erste Ende der Hydraulikzylinder (25) in dem Schaftelement (8, 8a) mit einem Gelenkbolzen (27) an eine Basisstütze (19) angelenkt ist, die mit dem Panel (1) eine Pendelbewegung ausführt, und das zweite Ende der Hydraulikzylinder (25) an dem unteren Ende des Schaftelements (8, 8a) mit einem Gelenkbolzen (26) an eine Trageinrichtung (23) angelenkt ist, die innerhalb des Schaftelements (8, 8a) platziert ist und auf einer nicht drehbaren Stützwelle (14) befestigt ist.

2. Untertauchbare Wellenenergie-Konversionseinheit gemäß Anspruch 1, **dadurch gekennzeichnet, dass** das Panel (1) mindestens ein im Wesentlichen rohrförmiges und hohles Erfassungselement (7, 7b) hat, das zusammen mit dem Schaftelement (8, 8a) einen Trockenraum innerhalb des Panels (1) bildet.

3. Untertauchbare Wellenenergie-Konversionseinheit gemäß Anspruch 1 oder 2, **dadurch gekennzeichnet, dass** ein Maschinenraum (16), der zumindest eine hydraulische Konversionseinheit (17) und eine Steuereinheit (21) für die hydraulische Konversionseinheit (17) umfasst, in dem Trockenraum innerhalb des Panels (1) platziert ist.

4. Untertauchbare Wellenenergie-Konversionseinheit gemäß einem der vorangehenden Ansprüche, **dadurch gekennzeichnet, dass** das Panel (1) an den unteren Enden der Schaftelemente (8, 8a) auf der stationären Stützwelle (14) mit Hilfe von Lagern (24) montiert ist, und das Panel (1) konfiguriert ist, um eine Pendelbewegung um die Zentralachse der nicht rotierbaren Stützwelle (14) zu vollziehen.

5. Untertauchbare Wellenenergie-Konversionseinheit gemäß einem der vorangehenden Ansprüche, **dadurch gekennzeichnet, dass** die Trockenräume innerhalb des Panels (1) gegen Seewasser mit Dichtungen abgedichtet sind, zumindest zwischen der Stützwelle (14) und den Seitenwänden des Schaftelements (8, 8a) an Stellen von Kappen (9) der Einstiegsöffnungen und um Durchgangslöcher der elektrischen Kabel (4) und um Wasserrohre (5) oder um entsprechende Leitungen.

6. Untertauchbare Wellenenergie-Konversionseinheit gemäß einem der vorangehenden Ansprüche, **dadurch gekennzeichnet, dass** das Panel (1) zumindest aus Schaftelement-Modulen (8a) und einer Gruppe von Erfassungselement-Modulen (6b, 7b) besteht, von denen zumindest ein Erfassungselement-Modul (7b) einen internen Trockenraum zumindest für den Maschinenraum (16) hat.

## Revendications

1. Unité de conversion d'énergie houlomotrice submersible comprenant au moins un socle stationnaire (2), un panneau (1) articulé au niveau de son bord inférieur sur le socle stationnaire (2) pour effectuer un mouvement en va-et-vient en réponse à l'énergie cinétique de vagues ou de courants de marée, et une machine de prise de force (PTO) placée à l'intérieur du panneau (1), **caractérisée en ce que** le panneau (1) comporte au moins un élément d'arbre (8, 8a) ayant un espace sec à l'intérieur du panneau (1), et la machine à prise de force (PTO) contient des moyens de collecte d'énergie houlomotrice (15) qui sont des vérins hydrauliques (25) qui sont placés dans l'espace sec à l'intérieur de l'élément d'arbre (8, 8a) et **en ce que** la première extrémité des vérins hydrauliques (25) est articulée dans l'élément d'arbre (8, 8a) à l'aide d'une goupille d'articulation (27) sur une base de support (19) se déplaçant en va-et-vient avec le panneau (1), et la seconde extrémité des vérins hydrauliques (25) au niveau de l'extrémité inférieure de l'élément d'arbre (8, 8a) est articulée à l'aide d'une goupille d'articulation (26) sur un ensemble de support (23) placé à l'intérieur de l'élément d'arbre (8, 8a) et fixée de manière stationnaire sur un arbre de support non rotatif (14).

2. Unité de conversion d'énergie houlomotrice submersible selon la revendication 1, **caractérisée en ce que** le panneau (1) comporte au moins un élément de capture essentiellement tubulaire et creux (7, 7b) formant ensemble avec l'élément d'arbre (8, 8a) un espace sec à l'intérieur du panneau (1).

3. Unité de conversion d'énergie houlomotrice submersible selon la revendication 1 ou 2, **caractérisée en ce qu'**un espace à machines (16) contenant au moins une unité de conversion hydraulique (17) et une unité de commande (21) pour l'unité de conversion hydraulique (17) est placé dans l'espace sec à l'intérieur du panneau (1).

4. Unité de conversion d'énergie houlomotrice submersible selon l'une quelconque des revendications précédentes, **caractérisée en ce qu'**aux extrémités inférieures des éléments d'arbre (8, 8a), le panneau (1) est monté sur l'arbre de support stationnaire (14) à l'aide de paliers (24), et le panneau (1) est agencé pour effectuer un mouvement en va-et-vient autour de l'axe central de l'arbre de support non rotatif (14).

5. Unité de conversion d'énergie houlomotrice submersible selon l'une quelconque des revendications précédentes, **caractérisée en ce que** les espaces secs à l'intérieur du panneau (1) ont été rendus étanches à l'eau de mer par des joints au moins entre l'arbre de support (14) et les parois latérales de l'élément d'arbre (8, 8a), à des emplacements de couvercles (9) des regards et autour de trous traversants du câble électrique (4) et de conduites d'eau (5) ou des conduites correspondantes.

6. Unité de conversion d'énergie houlomotrice submersible selon l'une quelconque des revendications précédentes, **caractérisée en ce que** le panneau (1) est constitué au moins de modules d'élément d'arbre (8a) et d'un groupe de modules d'élément de capture (6b, 7b), au moins un module d'élément de capture (7b) comportant une chambre sèche interne au moins pour l'espace à machines (16).
